# FASCICULE DE BREVET EUROPEEN

(11) **EP 1 695 815 B1**
(45) Date de publication et mention de la délivrance du brevet: **12.03.2008**
(21) Numéro de dépôt: 06003356.0
(22) Date de dépôt: 20.02.2006
(51) Int. Cl.: B29D 30/38, B29C 70/22, B60C 9/00

(54) **Dispositif et procédé de fabrication de nappes ondulées**
Vorrichtung und Verfahren zur Herstellung von wellenförmigen Bändern
Apparatus and method of manufacturing undulated webs

(30) Priorité: 28.02.2005 FR 0501995
(43) Date de publication de la demande: 30.08.2006
(73) Titulaire: Société de Technologie Michelin, 63000 Clermont-Ferrand (FR); Michelin Recherche et Technique S.A., 1763 Granges-Paccot (CH)
(72) Inventeur: Jault, Bernard, 63510 Aulnat (FR); Filhon, Michel, 63000 Clermont-Ferrand (FR)
(74) Mandataire: Bauvir, Jacques

(56) Documents cités:
- EP-A- 0 335 718
- EP-A- 0 431 187
- EP-A- 0 724 949
- US-A- 3 459 615
- US-A- 4 064 915
- US-A- 4 094 354
- US-A- 5 009 732

## Description

L'invention concerne le domaine de la fabrication des pneumatiques, et en particulier le domaine de la fabrication des produits semi-finis du type des nappes de renfort utilisées par exemple dans les ceintures de sommet des enveloppes de pneumatiques.

Les ceintures sommet comprennent usuellement un ou plusieurs ceintures de renfort, composées de fils enrobés dans un mélange caoutchoutique et faisant des angles déterminés et généralement de signes opposées par rapport à la direction circonférentielle du pneumatique.

Par ailleurs, les pneumatiques modernes font dorénavant largement appel à des renforts dits à zéro degré, caractérisés par le fait qu'ils sont composés de fils de renfort faisant un angle sensiblement nul avec la direction circonférentielle.

Les procédés permettant de déposer ces renforts à zéro degré sont eux-mêmes largement connus. Ils consistent usuellement à déposer sur l'ébauche de pneumatique conformée,
- soit des fils unitaires enrobés de produit caoutchouteux ou des bandes de faible largeur, constituées d'un faible nombre de fils unitaires, par enroulement de spires successives sur la largeur du sommet,
- soit un à deux tours d'un tronçon de nappe de semi-fini constitué lui-même de fils orientés à zéro degré et dont la largeur correspond sensiblement à la largeur du sommet de l'enveloppe.

On entend ici par bande ou nappe, une bande continue ou une nappe droit fil réalisée à partir d'un mélange caoutchouteux et renforcée par un ou plusieurs fils disposés côte à côte, parallèles entre eux et s'étendant dans la direction longitudinale de la bande. Un fil peut désigner un fil unitaire, un câblé composé de plusieurs fils unitaires, ou encore un retors, il peut être de nature textile ou métallique.

Toutefois, dans le but de résoudre les problèmes liés aux variations de circonférence de l'ébauche de pneumatique entre l'étape de pose des renforts à zéro degré et l'étape finale de conformation en presse de cuisson il a été proposé de poser les fils ou les bandelettes de fils en réalisant de légères ondulations. Cette technique présente l'avantage de pouvoir adapter la longueur de fils posés à la circonférence finale du pneumatique.

A cet égard la technique de pose par enroulement de spires de fils ou de bandes de faible largeur s'avère particulièrement adaptée, en particulier pour la pose de fils à faible élasticité, comme les fils métalliques par exemple. Ces techniques sont décrites à titre illustratif dans le document EP 1 208 963. Elles se caractérisent par la pose du fil ou de la bande directement sur l'ébauche de pneumatique.

Le procédé de réalisation de bandes ou nappes continues renforcées par des fils ondulés dans le plan de la nappe, nappes communément désignées sous l'appellation de nappe ondulée, se distingue des techniques précédentes en ce que ce procédé comporte deux étapes. Dans une première étape, on réalise sur un procédé dédié, des nappes ondulées sous forme de bandes continues de grandes longueurs. Puis dans une seconde étape on découpe la nappe en tronçons d'une longueur donnée, et on enroule les dits tronçons sur l'ébauche de pneumatique.

Les procédés de réalisation de nappes ondulées dont les fils de renfort présentent des ondulations dans la direction transversale du plan de la nappe sont connus et sont décrits à titre d'exemple dans le document EP 724 949. Ils consistent, à délivrer les fils de renfort à une vitesse donnée et, à l'aide d'un moyen donné, à déplacer les fils de renfort transversalement à la direction de progression de manière à créer une ondulation des fils de renfort, et à déposer ces fils sur un support qui peut être une bande ou une nappe de caoutchouc ou de plastique. La vitesse du support est adaptée pour recevoir les fils.

Il est également possible de déposer une deuxième couche de matériau support pour s'assurer du bon maintien en position des fils ainsi placés en sandwich entre deux bandes de caoutchouc ou de plastique. Les nappes de caoutchouc ont également pour fonction, comme on le verra par la suite, de procurer à la nappe ondulée ainsi obtenue, une certaine résistance à la traction longitudinale de manière à autoriser la manipulation de la nappe dans les opérations d'assemblage qui suivent, sans altérer les caractéristiques géométriques des ondulations conférées aux fils de renfort.

La nappe de produit fini ainsi obtenue peut être découpée en un ou plusieurs tronçons de longueur déterminée qu'il est possible d'enrouler sur une ébauche de pneumatique à un premier diamètre. Lors de la conformation en presse les fils de renfort sont portés à un deuxième diamètre, supérieur au précédent, et perdent alors leurs ondulations pour adopter une direction sensiblement rectiligne et faisant un angle égal à zéro degré avec la direction longitudinale.

Ce mode de réalisation donne de bons résultats, mais nécessite de contrôler rigoureusement la dépose des fils pour éviter qu'ils ne se superposent entre eux, en particulier lorsque l'on a affaire à un grand nombre de fils à déposer sur des bandes de grande largeur, ce qui entraîne des moyens dédiés importants et donc onéreux.

C'est la raison pour laquelle il a été recherché un mode de réalisation plus souple et moins gourmand en investissements, tout en disposant d'un produit semi-fini apte à être utilisé sans déformation sur les moyens d'assemblage conventionnels.

La réalisation de nappes droit-fil en continu est largement connue. Les moyens traditionnels de fabrication sont constitués d'un ensemble de calandres permettant d'enrober dans un mélange caoutchouteux une nappe de fils de renfort disposés côte à côte, et parallèlement entre eux dans la direction longitudinale. Le semi-fini ainsi constitué se présente sous la forme d'une bande continue, communément désignée sous l'appellation de nappe droit fil, dans laquelle les fils de renfort sont recouverts par une épaisseur contrôlée de mélange, et dans laquelle les espaces entre les fils sont comblés par ledit mélange. On fabrique industriellement des nappes de ce type à des coûts relativement bas.

Le problème résolu par l'invention est de proposer un dispositif tel que défini dans la revendication 2, et un procédé tel que défini dans la revendication 1, qui permettent la réalisation d'une nappe ondulée continue à partir d'une nappe droit-fil réalisée sur un moyen traditionnel.

Un pneumatique obtenu par ledit procédé fait l'objet de la revendication 10. Des formes avantageuses de l'invention font l'objet des revendications dépendantes.

Le dispositif conforme à l'invention comprend :
- des moyens permettant de délivrer à une vitesse contrôlée donnée V1, une nappe droit fil continue composée d'une nappe de mélange caoutchouteux renforcée par des fils disposés côte à côte et parallèlement entre eux dans la direction longitudinale selon un pas donné,
- des moyens permettant de déplacer de manière alternative transversalement à la direction de progression et dans le plan de la nappe, l'ensemble de ladite nappe droit fil,
- des moyens de réception disposés en aval des moyens de déplacement transversal et coopérant avec ces derniers, ayant une vitesse linéaire V2 inférieure à V 1,
- des moyens d'application de fils de bridage disposés sur la partie aval des moyens de réception,
- des moyens de pose ou de conditionnement de la nappe ondulée.

Les moyens permettant de déplacer de manière alternative transversalement à la direction de progression et dans le plan de la nappe ont pour effet technique de donner une forme ondulée à l'ensemble de la nappe et des fils qui la composent, lorsque ladite nappe est déposée sur un moyen de réception fixe axialement.

La vitesse linéaire dans le sens longitudinal du moyen de réception (V2) est ajustée par rapport à la vitesse de délivrance de la nappe droit fil à l'entrée du dispositif de manière à ce que le rapport des vitesses V1/V2 corresponde au rapport d'une longueur de fil ondulé entre deux points donnés et de la longueur de la corde reliant ces deux points.

Un autre procédé consiste à faire passer la nappe entre une paire de rouleaux engrenant en prise l'un avec l'autre de manière à onduler la nappe dans une direction perpendiculaire au plan de la nappe puis, a faire passer la nappe ainsi déformée entre des rouleaux de manière à coucher les ondulations de la nappe dans le plan de la nappe comme cela est décrit dans le brevet EP 431 187.

Toutefois, si le semi-fini ainsi obtenu a bien la forme ondulée requise, on observe qu'il est inutilisable en l'état sur les moyens classiques de fabrication, en raison d'une absence totale de résistance à la traction longitudinale, dés qu'il est détaché du moyen de réception. La nappe a tendance à reprendre la forme d'une nappe droit fil.

Ce phénomène est encore accentué lorsque l'on met en oeuvre des nappes droit-fil contenant des fils de renfort métalliques. Ces derniers, après avoir été mis sous forme ondulée, agissent comme des ressorts et développent des forces élastiques dont la résultante est une force longitudinale qui a pour effet de décoller la nappe du support et de provoquer des vrillages la rendant impropre à l'utilisation.

Ce problème est résolu en déposant sur au moins une des faces de la nappe ondulée des fils de bridage rectilignes dans la direction longitudinale. Les fils de bridage sont disposés transversalement à un pas déterminé et supérieur au pas des fils de renfort. De manière surprenante la nappe ondulée obtenue ne vrille pas et conserve sa géométrie, même dans le cas de fils de renfort métalliques de grande raideur, sous réserve d'adapter le pas de pose des fils de bridage.

Ainsi, en choisissant judicieusement le pas et la résistance des fils de bridage il est possible de conférer au semi-fini une résistance à la traction suffisante pour le rendre apte à une mise en oeuvre satisfaisante sur des moyens conventionnels de fabrication, et en particulier à le rendre apte à subir les efforts longitudinaux liés aux tensions de pose conférées au produit pendant l'opération d'assemblage.

Un pas de pose des fils de bridage compris entre 10 et 50 mm permet de répondre à la plupart des configurations essayées. Le choix d'un pas plus réduit est recommandé pour les fils de renfort métalliques de grande raideur tels qu'évoqués ci-dessus ; un pas plus lâche pourra être adopté pour des nappes comportant des fils de renfort textile.

Pour rendre cette nappe ondulée utilisable en pneumatique, il convient également de s'assurer que la nappe ondulée, telle que définie ci-dessus, une fois intégrée dans la construction d'une ébauche de pneumatique, pourra subir la conformation finale de manière à ce que les fils de renfort fassent un angle sensiblement nul avec la direction longitudinale. A cet effet il convient de choisir judicieusement la nature du fil de bridage.

Une première possibilité consiste à choisir un fil de bridage élastique. En adaptant de manière judicieuse le pas de pose des fils de bridage et l'élasticité de chacun desdits fils de bridage, on recherchera d'une part à stabiliser dans la direction longitudinale la nappe ondulée lorsque cette dernière est décollée du moyen de réception ou du moyen de conditionnement, d'autre part à faire en sorte que, lors de la conformation, l'effort supplémentaire pour allonger les fils de bridage jusqu'à ce que les fils de renfort soient alignés avec la direction longitudinale soit négligeable. En conséquence l'élasticité des fils de bridage ne doit être ni trop forte ni trop faible.

En pratique il a été réalisé avec satisfaction un tissu ondulé ayant des ondulations d'une période égale à 115 mm avec une amplitude de 8 mm, à partir d'une nappe droit fil composée de fils de renfort métalliques câblés du type 2/23 disposés avec une densité de 143 fils par dm, en utilisant des fils de bridage élastique ayant une élongation de 5% environ à 5 daN à un pas de 30 mm. Le pas des fils de bridage a été ramené à 25 mm lorsque le fil métallique a été remplacé par un câblé métallique de type 19/18.

Une seconde possibilité consiste à utiliser un fil de bridage ayant une faible élasticité mais présentant une résistance à la rupture faible. Dans ces conditions lors de la conformation en presse les fils de bridage se rompent, permettant aux fils de renfort de s'aligner avec la direction longitudinale.

En pratique les fils de bridage cassants ont une résistance à la rupture comprise entre 2 et 10 daN.

Un dispositif conforme à l'invention est décrit ci après en référence aux figures ci jointes dans lesquelles :
- la figure 1 représente une vue schématique d'un tronçon de nappe ondulée,
- la figure 2 représente une vue schématique d'un dispositif conforme à l'invention.

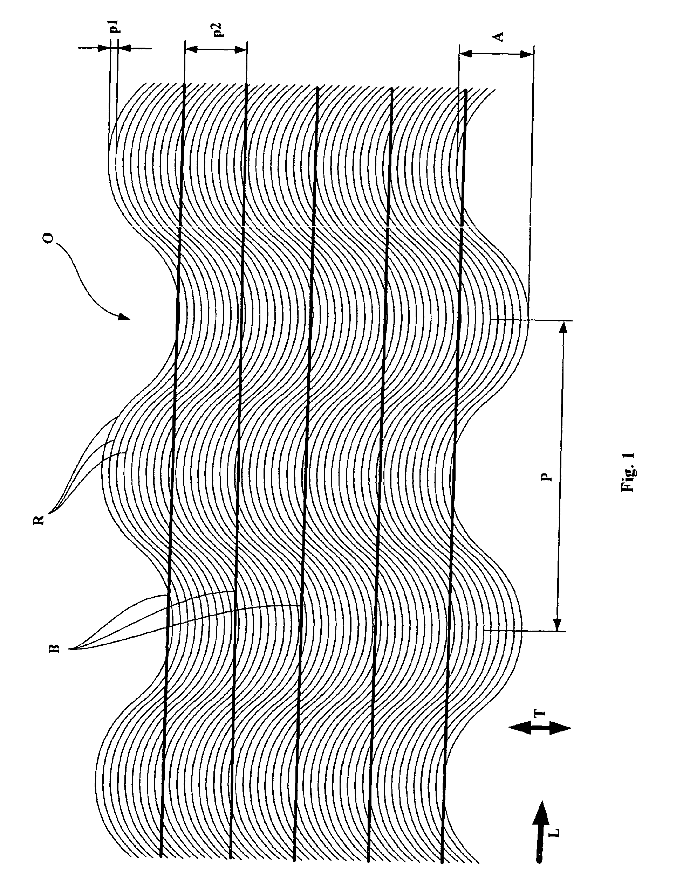

La figure 1 représente une vue schématique en plan d'un tronçon de nappe ondulée O dans laquelle on peut voir les fils de renfort R arrangés côte à côte dans la direction longitudinale L selon un pas p1 donné, dans laquelle les fils forment, dans le plan de la nappe O, des ondulations dans la direction transversale T d'une amplitude A et d'une période P. Les fils de bridage B sont disposés de manière rectiligne dans la direction longitudinale L sur une face de la nappe O. Ils sont espacés d'un pas p2 supérieur au pas p1 des fils de renfort.

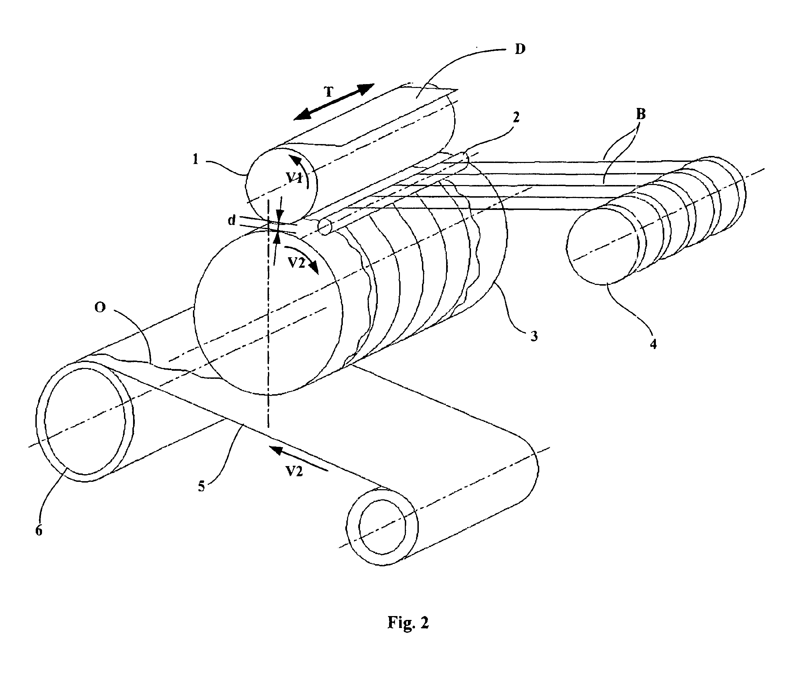

La figure 2 représente une vue schématique en perspective d'un dispositif apte à réaliser des tissus ondulés conformes à l'invention.

Ce dispositif comporte des moyens permettant de délivrer à une vitesse contrôlée V1, une nappe droit fil D continue. Ces moyens ne sont pas représentés sur la figure 2 mais sont constitués de moyens classiques d'alimentation et de déroulage d'une bande continue de produit plats disposée dans un intercalaire de protection. La nappe droit fil D est composée de fils de renfort disposés côte à côte et parallèlement entre eux dans la direction longitudinale selon un pas donné. Le pas des fils de renfort est sensiblement égal au pas p1.

La nappe est embarrée sur un premier rouleau 1, dit rouleau onduleur, animé d'un mouvement alternatif transversal selon la direction T, parallèle à l'axe de rotation du rouleau. La vitesse de rotation du rouleau onduleur 1 est ajustée de manière à ce que sa vitesse circonférentielle soit égale à V1.

Un deuxième rouleau 3, dit rouleau récepteur est disposé en aval du rouleau onduleur. Le rouleau récepteur 3 sur lequel la nappe est également embarrée en sortie du rouleau onduleur a une vitesse de rotation ajustée de manière à ce que sa vitesse circonférentielle V2 soit inférieure à V1.

La distance d entre la circonférence du rouleau onduleur et la circonférence du rouleau récepteur est ajustable.

En déplaçant le rouleau onduleur 1 de manière alternative dans la direction transversale T avec une période et une fréquence donnée, on crée une ondulation de l'ensemble des fils de renfort R de la nappe O dans le plan de ladite nappe lorsque cette dernière est déposée sur le rouleau récepteur 3.

L'ajustement de la période et de l'amplitude du mouvement transversal du rouleau onduleur 1, de la distance d, et des vitesses V 1 et V2, se fait de manière connue pour obtenir une période P et une amplitude A de l'ondulation des fils de renfort R, une fois ces derniers déposés sur le rouleau récepteur 3.

On observe néanmoins, de manière expérimentale, que les efforts liés à la poussée de l'ensemble de la nappe dans la direction transversale ont tendance à faire glisser ladite nappe sur les rouleaux onduleur et récepteur. Il est donc important que le rouleau récepteur et le rouleau onduleur soient conçus pour admettre des efforts transversaux élevés.

Le glissement dans la direction transversale a pour effet de détruire la régularité géométrique des ondulations. Il peut être maîtrisé en traitant la surface des rouleaux de manière à améliorer le collant de la nappe sur lesdits rouleaux.

A cet effet une première solution consiste à conférer des propriétés magnétiques à la surface desdits rouleaux. Cette solution n'est évidemment opérante que dans le cas où la nappe est constituée de fils de renfort métalliques.

Une autre solution consiste à faire varier la température de surface des rouleaux.

Il est encore possible de jouer sur la tension entre le système d'alimentation et de déroulage de la nappe droit fil et le rouleau onduleur. Toutefois on observera que la tension entre le rouleau onduleur et le rouleau récepteur doit être réglée à des valeurs les plus basses possibles pour permettre à la nappe de se déposer sans déformation longitudinale sur le rouleau récepteur.

Les moyens d'application des fils de bridage (2, 4) sont constitués d'un dévidoir 4 et d'un rouleau d'application 2 disposé sur la partie aval des moyens de réception. Les fils de bridage B sont déposés de manière rectiligne sur au moins une des faces de la nappe ondulée O de manière à éviter toute déformation longitudinale de ladite nappe lorsque cette dernière est détachée du rouleau récepteur ou de son support de conditionnement.

Les moyens de conditionnement sont constitués par un intercalaire 5, circulant à la vitesse V2, et sur lequel est déposée la nappe ondulée O. La nappe ondulée O et l'intercalaire 5 sont enroulés conjointement autour d'un axe motorisé 6.

Il est possible de réaliser des dispositifs équivalents en utilisant des bandes transporteuses en lieu et place des rouleaux ; auquel cas on devra s'assurer que les parties mobiles sont aptes à subir les efforts transversaux liés aux mouvements de la nappe sous l'effet de l'ondulation.

On peut aussi concevoir que la bande ondulée soit déposée sur un moyen de transfert relié à la surface cylindrique d'un tambour d'assemblage destiné à la réalisation de pneumatique ou directement sur la surface d'un tambour d'assemblage. Cet arrangement permet de supprimer l'opération de conditionnement et de stockage et peut s'avérer intéressant lorsque la consommation de nappe ondulée à l'entrée de la machine d'assemblage est élevée.

Le procédé de fabrication d'une nappe ondulée (O) à partir d'une nappe droit fil mettant en oeuvre le dispositif décrit ci-dessus comprend les étapes suivantes :
- réaliser une bande continue de nappe droit fil continue (D) composée d'une nappe de mélange caoutchouteux renforcée par des fils de renfort (R) disposés côte à côte et parallèlement entre eux dans la direction longitudinale (L) selon un pas donné (p1), à l'aide d'un procédé traditionnel,
- délivrer ladite nappe droit til (D) à une vitesse linéaire contrôlée V1,
- déplacer de manière alternative dans le plan de la nappe et transversalement à la direction de progression l'ensemble de ladite nappe,
- appliquer la nappe ondulée (O) ainsi formée sur un moyen de réception (3) ayant une vitesse linéaire V2 inférieure à V1,
- déposer sur au moins une des faces de la nappe ondulée (O), dans la direction longitudinale de progression, des fils de bridage (B) rectilignes en les disposant transversalement à un pas déterminé (p2),
- déposer la nappe ondulée (O) sur un moyen de transfert ou de conditionnement (5, 6).

Ces étapes de procédé peuvent aisément s'intégrer dans le procédé général de fabrication d'un pneumatique soit au niveau d'un moyen centralisé distribuant les produits finis sur l'ensemble de moyens d'assemblage de pneumatique, soit directement au niveau d'une machine d'assemblage en raison de la grande simplicité de sa mise en oeuvre et de sa souplesse d'utilisation.

Par ailleurs, si l'emploi de nappes ondulées s'est largement répandu pour la réalisation des nappes de renfort sommet des pneumatiques, on peut tout à fait adapter le procédé et le dispositif décrits ci-dessus pour la réalisation de nappes ondulées situées dans d'autres parties du pneumatique.

## Revendications

1. Procédé de fabrication d'un pneumatique comprenant une nappe ondulée (O) constituée d'une nappe de mélange caoutchouteux renforcée par des fils de renfort (R) disposés côte à côte dans la direction de progression longitudinale (L) selon un pas donné (p1), et dans laquelle les fils de renfort (R) forment, dans le plan de la nappe, des ondulations dans la direction transversale d'une amplitude (A) et d'une période (P), procédé **caractérisé en ce q**u'il comprend les étapes suivantes :
- réaliser une bande continue de nappe droit fil continue (D) composée d'une nappe de mélange caoutchouteux renforcée par des fils de renfort (R) disposés côte à côte et parallèlement entre eux dans la direction longitudinale (L) selon un pas donné (p1), à l'aide d'un procédé traditionnel,
- déplacer de manière alternative l'ensemble de la nappe de manière à créer, transversalement à la direction (L) de la nappe, des ondulations des fils de renforcement dans le plan de la nappe,
- déposer sur au moins une des faces de la nappe ondulée (O), dans la direction longitudinale (L), des fils de bridage (B) rectilignes en les disposant transversalement à un pas déterminé (p2).

2. Dispositif destiné à la réalisation d'une nappe ondulée (O) constituée d'une nappe de mélange caoutchouteux renforcée par des fils de renfort (R) disposés côte à côte dans la direction de progression longitudinale (L) selon un pas donné (p1), nappe dans laquelle les fils de renfort (R) forment, dans le plan de la nappe, des ondulations dans la direction transversale d'une amplitude (A) et d'une période (P) contrôlée, dispositif **caractérisé en ce qu**'il comprend :
- des moyens permettant de délivrer une nappe droit fil continue (D) composée d'une nappe de mélange caoutchouteux renforcée par des fils de renfort (R) disposés côte à côte et parallèlement entre eux dans la direction longitudinale (L) selon un pas donné (p1),
- des moyens de déplacement transversal permettant de réaliser une nappe ondulée en déplaçant de manière alternative l'ensemble de la nappe de manière à créer, transversalement à la direction (L) de la nappe, des ondulations des fils de renforcement dans le plan de la nappe,
- des moyens de réception (3) disposés en aval des moyens de déplacement transversal (1), coopérant avec ces derniers,
- des moyens d'application (2) disposés sur la partie aval des moyens de réception (3), permettant de déposer des fils de bridage (B) dans la direction longitudinale (L).

3. Dispositif selon la revendication 2 dans lequel les moyens permettant de déplacer transversalement la nappe droit fil (D) sont formés d'un rouleau onduleur (1) autour duquel ladite nappe droit fil (D) est embarrée, ledit rouleau onduleur étant animé d'une vitesse circonférentielle V1 et d'un mouvement transversal alternatif d'une période et d'une amplitude donnée.

4. Dispositif selon la revendication 2 dans lequel les moyens de réception sont formés par un rouleau récepteur (3) animé d'une vitesse circonférentielle V2 et autour duquel la nappe ondulée (O) est embarrée.

5. Dispositif selon les revendications 3 et 4 dans lequel la distance (d) entre la circonférence du rouleau onduleur (1) et la circonférence du rouleau récepteur (3) est ajustable.

6. Dispositif selon l'une des revendications 2 à 5 dans lequel les surfaces desdits rouleaux onduleur (1) et récepteur (3) ont des propriétés leur permettant d'augmenter l'adhérence des nappes (D, O) circulant sur leurs circonférences respectives.

7. Dispositif selon la revendication 6 dans lequel les surfaces des rouleaux onduleur (1) et récepteur (3) ont des propriétés magnétiques.

8. Dispositif selon la revendication 6 dans lequel les surfaces des rouleaux onduleur (1) et récepteur (3) sont régulées thermiquement.

9. Dispositif selon la revendication 2, dans lequel les moyens permettant de déplacer transversalement la nappe droit fil (D) comprennent une paire de rouleaux engrenant en prise l'un avec l'autre de manière à onduler la nappe dans une direction perpendiculaire au plan de la nappe et des rouleau destinés à coucher les ondulations de la nappe dans le plan de la nappe.

10. Pneumatique réalisé à partir d'une nappe ondulée (O), composée d'une nappe de mélange caoutchouteux renforcée par des fils de renfort (R) disposés côte à côte dans la direction longitudinale (L) selon un pas (p1) donné, nappe dans laquelle lesdits fils de renfort forment, dans le plan de la nappe, des ondulations dans la direction transversale d'une amplitude (A) et d'une période (P) contrôlées, **caractérisé en ce que** des fils de bridage (B) rectilignes sont placés sur au moins une des faces de la nappe ondulée (O) dans la direction longitudinale (L) et sont disposés transversalement à un pas (p2) déterminé et supérieur au pas (p1) des fils de renfort (R).

11. Pneumatique selon la revendication 10, dans lequel les fils de bridage (B) de la nappe ondulée (O) sont élastiques et ont une résistance à l'allongement d'environ 5 daN, à 5% d'allongement.

12. Pneumatique selon la revendication 11 dans lequel le fils de bridage (B) de la nappe ondulée (O) sont faiblement élastiques et ont une résistance à la rupture comprise entre 2 daN et 10 daN.

13. Pneumatique selon l'une des revendications 10 à 12 dans lequel les fils de bridage (B) de la nappe ondulée (O) sont disposés transversalement à un pas (p2) compris entre 10 et 50 mm.

## Claims

1. A process for manufacturing a tyre comprising an undulating ply (O) consisting of a ply of rubber mix reinforced by reinforcement cords (R) arranged side by side in the longitudinal machine direction (L) at a given pitch (p1), and in which the reinforcement cords (R) form, in the plane of the ply, undulations in the transverse direction of an amplitude (A) and a period (P), which process is **characterised in that** it comprises the following steps:
- producing a continuous strip of continuous straight-cord ply (D) composed of a ply of rubber mix reinforced by reinforcement cords (R) arranged side by side and parallel to one another in the longitudinal direction (L) at a given pitch (p1), using a traditional process,
- displacing alternatively the whole of said ply to create, transversely to the direction of the ply, undulations of the reinforcement cords in the plane of the ply,
- depositing on at least one of the faces of the undulating ply (O), in the longitudinal direction, rectilinear retaining cords (B) by arranging them transversely at a given pitch (p2).

2. A device intended for the production of an undulating ply (O) formed of a ply of rubber mix reinforced by reinforcement cords (R) arranged side by side in the longitudinal machine direction (L) at a given pitch (p1), in which ply the reinforcement cords (R) form, in the plane of the ply, undulations in the transverse direction of a controlled amplitude (A) and period (P), which device is **characterised in that** it comprises:
- means for delivering a continuous straight-cord ply (D) composed of a ply of rubber mix reinforced by reinforcement cords (R) arranged side by side and parallel to one another in the longitudinal direction (L) at a given pitch (p1),
- transverse displacement means for delivering an undulated ply by displacing alternatively the whole of said ply, to create transversely to the direction (L) of the ply, undulations of the reinforcement cords in the plane of the ply,
- receiving means (3) arranged downstream of the transverse displacement means (1) and cooperating with the latter,
- means (2), arranged on the downstream part of the receiving means (3), for applying retaining cords (B) in the longitudinal direction (L).

3. A device according to Claim 2, in which the means for transversely displacing the straight-cord ply (D) comprise an undulation roller (1) around which said straight-cord ply (D) is wound, said undulation roller being moved at a circumferential speed V1 and an alternating transverse movement of given period and amplitude.

4. A device according to Claim 2, in which the receiving means are formed by a receiving roller (3) moved at a circumferential speed V2 and around which the undulating ply (O) is wound.

5. A device according to Claims 3 and 4, in which the distance (d) between the circumference of the undulation roller (1) and the circumference of the receiving roller (3) is adjustable.

6. A device according to one of Claims 2 to 5, in which the surfaces of said undulation (1) and receiving (3) rollers have properties which enable them to increase the adherence of the plies (D, O) travelling over their respective circumferences.

7. A device according to Claim 6, in which the surfaces of the undulation (1) and receiving (3) rollers have magnetic properties.

8. A device according to Claim 6, in which the surfaces of the undulation (1) and receiving (3) rollers are thermally controlled.

9. A device according to claim 2, in which the transverse displacement means comprise a pair of gear-shaped roller in meshing engagement to undulate the ply in a direction perpendicular to the plane of the ply and rolls to lay down the undulated ply into a planar arrangement.

10. A tyre produced from an undulating ply (O), composed of a ply of rubber mix reinforced by reinforcement cords (R) arranged side by side in the longitudinal direction (L) at a given pitch (p1), in which ply said reinforcement cords form, in the plane of the ply, undulations in the transverse direction of a controlled amplitude (A) and period (P), **characterised in that** rectilinear retaining cords (B) are placed on at least one of the faces of the undulating ply (O) in the longitudinal direction (L) and are arranged transversely at a given pitch (p2) greater than the pitch (p1) of the reinforcement cords (R).

11. A tyre according to Claim 10, in which the retaining cords (B) of the undulating ply (O) are elastic and have a resistance to elongation of approximately 5 daN at 5% elongation.

12. A tyre according to Claim 10, in which the retaining cords (B) of the undulating ply (O) are slightly elastic and have a tensile strength of between 2 daN and 10 daN.

13. A tyre according to one of Claims 10 to 12, in which the retaining cords (B) of the undulating ply (O) are arranged transversely at a pitch (p2) of between 10 and 50 mm.

## Patentansprüche

1. Verfahren zur Herstellung eines Luftreifens mit einer gewellten Lage (0), die aus einer durch nebeneinander in der Längsvorschubrichtung (L) gemäß einem gegebenen Abstand (p1) angeordnete Verstärkungsfasern (R) verstärkten Kautschukmischung besteht, und bei der die Verstärkungsfasern (R) in der Ebene der Lage Welligkeiten in der Querrichtung mit einer Amplitude (A) und einer Periode (P) bilden, wobei das Verfahren **dadurch gekennzeichnet ist, dass** es die folgenden Schritte aufweist:
- Herstellen eines endlosen Bands einer endlosen faserparallelen Lage (D), die aus einer durch nebeneinander und parallel zueinander in Längsrichtung (L) gemäß einem gegebenen Abstand (p1) angeordnete Verstärkungsfasern (R) verstärkten Lage einer Kautschukmischung besteht, mit Hilfe eines traditionellen Verfahrens,
- abwechselndes Verschieben der ganzen Lage, um quer zur Richtung (L) der Lage Welligkeiten der Verstärkungsfasern in der Ebene der Lage zu erzeugen,
- Auflegen auf mindestens eine der Seiten der gewellten Lage (O) in der Längsrichtung (L) von geradlinigen Spannfasern (B), indem sie quer mit einem bestimmten Abstand (p2) angeordnet werden.

2. Vorrichtung zur Herstellung einer gewellten Lage (0) bestehend aus einer durch nebeneinander in der Längsvorschubrichtung (L) gemäß einem gegebenen Abstand (p1) angeordnete Verstärkungsfasern (R) verstärkten Lage einer Kautschukmischung, einer Lage, bei der die Verstärkungsfasern (R) in der Ebene der Lage Welligkeiten in der Querrichtung mit einer kontrollierten Amplitude (A) und Periode (P) formen, wobei die Vorrichtung **dadurch gekennzeichnet ist, dass** sie aufweist:
- Einrichtungen, die es ermöglichen, eine endlose faserparallele Lage (D) zu liefern, die aus einer durch nebeneinander und parallel zueinander in Längsrichtung (L) gemäß einem gegebenen Abstand (p1) angeordnete Verstärkungsfasern (R) verstärkten Lage einer Kautschukmischung besteht,
- Querverschiebungseinrichtungen, die es ermöglichen, durch abwechselndes Verschieben der Gesamtheit der Lage derart, dass quer zur Richtung (L) der Lage Welligkeiten der Verstärkungsfasern in der Ebene der Lage erzeugt werden, eine gewellte Lage herzustellen,
- Aufnahmeeinrichtungen (3), die hinter den Querverschiebungseinrichtungen (1) angeordnet sind und mit diesen zusammenwirken,
- Aufbringeinrichtungen (2), die im hinteren Bereich der Aufnahmeeinrichtungen (3) angeordnet sind und es ermöglichen, Spannfasern (B) in Längsrichtung (L) aufzulegen.

3. Vorrichtung nach Anspruch 2, bei der die Einrichtungen, die die Querverschiebung der faserparallelen Lage (D) erlauben, aus einer Wellenformungsrolle (1) bestehen, um die die faserparallele Lage (D) drehgespannt wird, wobei die Wellenformungsrolle mit einer Umfangsgeschwindigkeit V1 und einer abwechselnden Querbewegung mit gegebener Periode und Amplitude angetrieben wird.

4. Vorrichtung nach Anspruch 2, bei der die Aufnahmeeinrichtungen von einer Aufnahmerolle (3) gebildet werden, die mit einer Umfangsgeschwindigkeit V2 angetrieben wird und um die die gewellten Lage (O) drehgespannt wird.

5. Vorrichtung nach den Ansprüchen 3 und 4, bei der der Abstand (d) zwischen dem Umfang der Wellenformungsrolle (1) und dem Umfang der Aufnahmerolle (3) einstellbar ist.

6. Vorrichtung nach einem der Ansprüche 2 bis 5, bei der die Flächen der Wellenformungsrolle (1) und der Aufnahmerolle (3) Eigenschaften haben, die es ihnen ermöglichen, die Haftung der Lagen (D, O) zu erhöhen, die gemäß ihren jeweiligen Umfängen umlaufen.

7. Vorrichtung nach Anspruch 6, bei der die Flächen der Wellenformungsrolle (1) und der Aufnahmerolle (3) magnetische Eigenschaften haben.

8. Vorrichtung nach Anspruch 6, bei der die Flächen der Wellenformungsrolle (1) und der Aufnahmerolle (3) thermisch reguliert werden.

9. Vorrichtung nach Anspruch 2, bei der die Einrichtungen, die die Querverschiebung der faserparallelen Lage (D) ermöglichen, ein Paar von ineinandergreifenden Rollen, die miteinander in Eingriff sind, um die Lage in einer Richtung lotrecht zur Ebene der Lage zu wellen, und Rollen aufweisen, die dazu bestimmt sind, die Welligkeiten der Lage in der Ebene der Lage flachzulegen.

10. Luftreifen, der ausgehend von einer gewellten Lage (0) hergestellt wird, die aus einer durch nebeneinander in der Längsrichtung (L) gemäß einem gegebenen Abstand (p1) angeordnete Verstärkungsfasern (R) verstärkten Lage einer Kautschukmischung besteht, einer Lage, in der die Verstärkungsfasern in der Ebene der Lage Welligkeiten in Querrichtung mit kontrollierter Amplitude (A) und Periode (P) bilden, **dadurch gekennzeichnet, dass** die geradlinigen Spannfasern (B) auf mindestens einer der Seiten der gewellten Lage (0) in Längsrichtung (L) angeordnet und quer mit einem bestimmten Abstand (p2) größer als der Abstand (p1) der Verstärkungsfasern (R) angeordnet werden.

11. Luftreifen nach Anspruch 10, bei dem die Spannfasern (B) der gewellten Lage (O) elastisch sind und eine Längungsfestigkeit von etwa 5 daN bei 5% Längung aufweisen.

12. Luftreifen nach Anspruch 11, bei dem die Spannfasern (B) der gewellten Lage (O) schwach elastisch sind und eine Reißfestigkeit haben, die zwischen 2 daN und 10 daN liegt.

13. Luftreifen nach einem der Ansprüche 1 bis 12, bei dem die Spannfasern (B) der gewellten Lage (O) quer mit einem Abstand (p2) zwischen 10 und 50 mm angeordnet sind.
